Europäisches Patentamt

(19) European Patent Office

Office européen des brevets

(11) Publication number: **0 083 327**

**B1**

(12) **EUROPEAN PATENT SPECIFICATION**

(45) Date of publication of patent specification: **27.03.85**

(21) Application number: **82850253.4**

(22) Date of filing: **08.12.82**

(51) Int. Cl.⁴: **A 23 L 2/06, A 23 C 21/08**

(54) Protein containing fruit drink and process for the manufacture thereof.

(30) Priority: **28.12.81 US 334522**

(43) Date of publication of application:
**06.07.83 Bulletin 83/27**

(45) Publication of the grant of the patent:
**27.03.85 Bulletin 85/13**

(84) Designated Contracting States:
**AT BE CH DE FR GB IT LI NL**

(56) References cited:
**DE-A-3 034 038**
**US-A-3 862 342**
**US-A-3 949 098**
**US-A-4 031 264**

(73) Proprietor: **Arla, ekonomisk förening**
**Dalagatan 3**
**S-105 46 Stockholm (SE)**

(72) Inventor: **Strinning, Olof c/o Arla, ekonomisk**
**förening**
**Dalagatan 3**
**S-105 46 Stockholm (SE)**
Inventor: **Dahlen, Anne-Marie c/o Arla,**
**ekonomisk förening**
**Dalagatan 3**
**S-105 46 Stockholm (SE)**

(74) Representative: **Avellan-Hultman, Olle**
**Avellan-Hultman Patentbyra AB P.O. Box 5366**
**S-102 46 Stockholm 5 (SE)**

# Description

The present invention relates to a protein containing acid fruit juice drink comprising at least a citrus juice portion or a corresponding amount of citrus aromas in the amount of 10—85 percents by weight and a milk raw material portion in the amount of 90—15 percents by weight, and in which the milk raw material portion includes 0,5—10 or preferably 1—3 percents by weight of whey proteins. The invention also relates to a process for the manufacture of such drinks.

A problem in the manufacture of protein containing fruit drinks is that the protein tends to precipitate from the drink unless special measures are taken in the process or special additives are used for the drink.

· During the past years numerous attempts have been made to combine fruit juices, especially citrus juices with proteins, but many such attempts have failed. The problems are especially noticeable when sugar is added for sweetening of the product. In order to solve the problems involved in the protein precipitation many previous different methods have been suggested, especially methods according to which different substances have been added to the fruit drink for eliminating or at least reducing the precipitation of proteins.

Among previous methods the U.S. patent 3,862,342 discloses a fruit drink containing citrus juice and whey proteins and in which different substances have been added for preventing the protein from precipitating. So, the said U.S. patent contains in addition to the citrus juice and the proteins some amount of glyco-proteins, starch, a sweetener in the form of corn syrup and a stabilizor, for instance a low viscosity sodium carboxymethylcellulose.

Correspondingly the U.S. patent 3,949,098 discusses the problem with precipitation of proteins, and the patent relates to a process for the manufacture of a protein containing orange drink in which is added, to an orange pulp base, a protein which is treated in a specific way, preferably a whey protein of a named type (Fore Tein 35 made by Foremost Foods Company of Foremost McKesson Inc.,). Further a foam suppressor of a character which is not closely defined is added, and also sugar, citric acid and imitation flavourings are added. After the manufacture of the drink the product is intended to be freezed and to be kept freezed during storage.

The present invention relates to a fruit drink containing protein and a process for the manufacture thereof, in which the problem with the protein precipitation has been solved in a way which is more simply and more economical for the process and in which there is no need for adding different types of stabilizing substances.

Therefore the object of the invention is to provide a protein containing drink including fruit juice, especially a citrus juice and possible further fruit juices and in which the protein is carefully bound to the fruit drink that it does not precipitate so that is does not precipitate even after several months of storing.

A further object of the invention is to provide a fruit drink which is preferably supplied ready for drinking and which in said condition ready for drinking, can be stored for at least several weeks, or which is manufactured in concentrated form for being diluted to any desired extent before being served.

A further object of the invention is to provide a fruit drink of the aforementioned type in which the protein is composed of whey proteins and are present in an amount of 0,5—10% of the prepared drink.

A further object of the invention is to provide a fruit drink of the aforementioned type which contains a sweetener, especially a sweetener in the form of lactose which by hydrolysis has been transformed to glucose and galactose.

The invention also relates to a process for the manufacture of a fruit drink of the above mentioned type.

Further advantages and characteristics of the invention will be evident from the following detailed description.

It is known that at least some proteins precipitate depending on the acidity of an acid fruit drink, and it is also known that the tendency of precipitation of proteins increases following an increasing content of sugar in the drink. Whey proteins have a lower tendency to precipitate, but also whey proteins precipitate to an increasing extent when the content of sugar is increased in the drink. It has, however, been shown that the said tendency of protein precipitation is reduced or is even completely eliminated if the sweetener of the drink is made by means of lactose which has been transformed to glucose and galactose. The reason for such reduced tendency of protein precipitation is not made clear, but it may be suggested that a slight amount of oligo saccharides are formed when lactose is transformed to glucose and galactose and that such oligo saccharides seem to have some ability of binding proteins. It is also possible that galactose has some protein binding ability.

It has been suggested to hydrolyse a lactose containing permeate from cheese whey to obtain glucose and galactose which can be used as a sucrose or glucose substitute in many food applications. It also has been suggested to use such hydrolysed lactose containing whey permeate as a sweetener even for protein-fortified fruit drinks. So far it seems that the known product has not been used in practice. Tests with the product in fruit drinks containing at least a citrus juice have shown that the protein precipitates rather quickly, even if the fruit drink is stored in cooled condition. Further the fruit drink sweetened with the hydrolysed lactose containing whey permeate had a less good taste, a whey taste, which was not considered acceptable for the product to be marketed on a commercial scale. The whey permeate contains both salts which probably act as precipitators to the protein, and different substances which give the non-acceptable taste to the fruit drink when sweetened with the hydrolysed whey permeate.

Surprisingly it has now shown that a sweetener made of pure lactose which has been hydrolysed into glucose and galactose and which is thereby free from salts actually acts as a binder of the protein even in fruit drinks containing a citrus juice portion, and a fruit drink of the type can be stored for several months without the risk that the protein precipitates. Further the glucose and galactose derived from hydrolysed pure lactose is free from substances giving a not wanted by-taste to the fruit drink. According to the invention it is therefore important that the hydrolysed lactose is made from pure lactose crystals which are solved in pure water and that the solution is hydrolyzed so as not to introduce and salt or substances giving the not wanted by-taste to the ready fruit drink.

According to the invention the sweetener of the fruit drink is therefore made by means of a hydrolysed pure lactose, in which at least the main portion of the lactose is transformed to glucose and galactose, and the fruit drink thereby obtains such protein stabilizing property that the finished drink can be pasteurized and can be stored for a period of at least several weeks without any observation of protein precipitation.

In order to improve the stability of the protein the ready made drink may be homogenised at a pressure of 30—250 bar or preferably 130—200 bar. The homogenising may be made before or after the drink is pasteurized.

The fruit drink according to the invention generally comprises a fruit juice portion and a milk raw material portion, in which the fruit juice portion contains 10—85% of the ready made drink, whereas the milk raw material portion contains 90—15% of the ready drink. The fruit juice portion also may be strengthened by fruit aromas.

The fruit juice portion may consist of a citrus juice or preferably contain a citrus juice portion and/or one or more further fruit juice parts. A mixture of different fruit juices can give a pleasant taste and as examples of such mixtures can be mentioned. Orange-pineapple, orange-lemon-grapefruit, orange-pineapple-passion fruit, mango-lemon, lemon-grapefruit, mango-passion fruit-orange, orange-mango-apricot, lemon-pineapple-passion fruit, lemon-blueberries-apple, lemon-lingonberries-cranberries, lemon-elderberries-wild strawberries, pure lemon etc. The citrus juice portion may be in the form of a concentrate which is strengthened with one or more further natural or synthetic aromas.

Depending on which taste, acidity, concentration degree etc. is wanted the juice portion of the finished product may vary between 10 and 85%, but in the case where such acid juices as orange, lemon, grapefruit, pineapple, passion fruit etc. are used the fruit juice portion preferably should be 40—60% of the finished product.

The milk raw material portion, which is included in an amount of 90—15%, or in the above mentioned acid fruit juice example preferably in the amount of 60—40% contains whey proteins in an amount of 0.5—10% or preferably 1—3% of the product ready for drinking. The whey proteins may be provided as a whey protein powder which is dissolved in water, or from whey or as a liquid whey protein concentrate.

The milk raw material portion can also be considered to include the sweetener, which according to the invention is a hydrolised lactose which may be manufactured according to a special process, and which is added in an amount of 2.5—20% or preferably 6—10% of the finished product. The sweetener also may be obtained from whey or a whey concentrate the lactose portion of which has been hydrolysed to glucose and galactose.

The hydrolysed lactose, can be manufactured for instance in that lactose, made of whey or a permeate from milk or whey and having a dry matter content of between 30 and 90% or preferably between 40 and 80%, is heated to 60—150°C or preferably 90—120°C, whereupon the lactose solution is hydrolysed by means of an acid cation exchanger or by means of a suitable enzyme, whereby the hydrolysis is proceeded to a hydrolysing degree of between 40 and 100% or preferably between 70 and 90%. At a hydrolysing degree of more than 80% there is practically no precipitation of crystals in the obtained glucose-galactose solution. The salt and taste free glucose-galactose product thereby obtained is cooled to a temperature of less than 30°C before preparing the fruit drink.

The manufacture of the fruit drink according to the invention is made as follows.

A solution of a whey protein material is made, and to the whey protein solution is added one ore more fruit juices while stirring the solution, at least one fruit juice of which preferably is a citrus juice.

Simultaneously therewith a lactose solution is transformed by hydrolysis to a solution of glucose and galactose having a dry matter content of 30—90% or preferably 40—80% and having a hydrolysing degree of 40—100% or preferably 70—90%, and the glucose-galactose solution thereby obtained is added under stirring to the protein juice solution at substantially the same temperature as the said protein juice solution. According to another embodiment the protein solution is made of a whey protein powder which is dissolved in water and is allowed to swell for at least 4 hours or preferably 4—10 hours before the fruit juice and the hydrolysed lactose is added. When the ingredients are well mixed and dissolved the juice drink is pasteurized by being heated to about 70—90°C which temperature is maintained for about 30—5 seconds respectively. The pasteurizing may also be made at higher temperatures for correspondingly shorter periods of time or lower temperatures for correspondingly longer periods of times which give the corresponding lethal effect. Just before or after the pasteurizing step the product is homogenised at 30—250 bar or preferably 130—200 bar, and the fruit drink is thereafter cooled and packed. The finished and packed product may after aseptic packing be stored at room temperature or otherwise preferably at refrigerator temperature of +4—+8°C for several weeks without any precipitation of proteins.

Alternatively the fruit drink can be manufactured in concentrated form in a protein concentrate, concentrated fruit juice and/or fruit aromas and a concentrated hydrolysed lactose. Such a concentrated fruit drink is not diluted until the drink is to be served. The concentration preferably is such that the concentrated fruit drink is diluted with up to five parts of water to obtain a fruit drink ready for drinking.

As mentioned above the risk of precipitation of proteins increases following an increased content of proteins, especially at long storage times, and likewise the risk of protein precipitation increases if there is a low content of hydrolysed lactose. In such cases the high content of proteins and/or the low content of hydrolysed lactose may be compensated in that the fruit drink is given a slight amount of a stabilizer of a type containing polysaccharides having some portion of galactose derivate or galacturone acid derivate, for instance pectin, carrageenan, arabino-galactane, agar-agar or a similar substance. Normally no such addition of stabilizer is needed, but at high content of proteins and low content of hydrolysed lactose a stabilizer of the above mentioned type may be added in an amount of 0.05—0.2 percents by weight of the finished product.

The finished product has a semi-transparent or opaque appearance and a smooth consistence without any precipitated portions of proteins or lactose. Depending on which raw materials have been added to the product the final product has a pH-value of 2.5—4.5 or preferably between 3.6 and 4.0. Naturally the pH-value may be adjusted up or down according to requirement before the product is pasteurized or subjected to a corresponding heat treatment whereupon the drink is cooled and packed.

In the following a number of examples of the process for the manufacture of the fruit drink according to the invention are given.

Example 1

A whey protein powder having 43% content of protein was dissolved in an amount of 2.3 kg (corresponding to the finished product) in 66.2 kg water at room temperature (+20°C) and the solution was allowed to stand swelling for 8 hours. While stirring, three different fruit juices concentrates were added viz. 3.0 kg orange concentrate having a rafractometer value of 63°, 7.0 kg pineapple concentrate having a refractometer value of 45° and 1.5 kg passion fruit concentrate having a refractometer value of 30.0°. While stirring, the solution was thereafter added with 20.0 kg of a hydrolysed lactose made of whey and comprising glucose and galactose and having a dry matter content of 42%. After some minutes of stirring the solution proved to be smooth and well mixed and the solution was pasteurized at 71°C for 30 seconds. Immediately after pasteurizing the product was cooled to 10—12°C and was packed.

From the process was obtained 100 kg of a good tasting and fully flavoured fruit drink having a smooth and pleasant consistency and an opaque yellow white appearance. The product had a microbiological keepability of several months, and after five weeks of storing at a temperature of +8°C there was no tendency of precipitation of proteins. The fruit juice portion of the final product corresponded to about 45%, the product had a protein content of 1.0% and a content of hydrolysed lactose of about 8.4% (as calculated according to the above mentioned dry matter content of 42%).

Example 2

4.5 kg of whey protein concentrate having a dry matter content of 30% and a protein content of 18.0% was dissolved in 43.5 kg water of room temperature. To the whey protein solution was added 10.0 kg lemon juice ready for drinking, 12.0 grapefruit juice ready for drinking and 30.0 kg of a hydrolysed lactose mainly comprising glucose and galactose and having a dry matter content of 60%.

After some minutes of stirring the mixture was smoothed and well mixed, thereupon the mixture was pasteurized at 75°C for a period of 15 seconds. The pasteurized product was homogenised at 100 bar and was immediately cooled at +4°C.

The product has a protein content of 0,81%. The fruit juice portion of the product was 22% and the portion of hydrolysed lactose was 18%. The drink had a fresh taste and was found refreshing. After five weeks of storing at +4°C there was no precipitation of protein.

Example 3

Whereas the products in examples 1 and 2 were made as drinks ready for drinking the produt of the present example is concentrated for being diluted when being served.

For this purpose a whey protein concentrate having a dry matter content of 25% was mixed in an amount of 32.6 kg with 22.4 kg pineapple concentrate having a refractometer value of 40% and 12.8 kg orange concentrate having a refractometer value of 50%, and the mixture was stirred for some minutes. To the mixture was thereafter added 32.2 kg of a hydrolysed lactose mainly comprising glucose and galactose and having a dry matter content of 60%.

After some minutes of stirring the product was pasteurized at 87°C for six seconds, it was homogenised at 200 bar and was cooled to +8°C.

The concentrated drink thereby obtained had a protein content of 4.9% and a content of hydrolysed lactose of 13%. The fruit juice portion of the concentrated drink was 35.2%.

Before serving the drink it is preferably diluted with 4—5 parts of water and is stirred to a product ready for drinking. The drink had a mild softly sour taste and a very mellow and pleasant texture.

The concentrated product had a very good shelf life, and after storing for ten weeks at +8°C the product showed no tendency to precipitation of proteins. With the same good result and without loosing its mild sour and agreeable taste the product could also be frozen for later use in melted and diluted form.

Example 4

A protein containing fruit drink ready for drinking was produced by dissolving 12.2 kg of a whey protein powder having a protein content of 75% in 12.62 kg water, and adding 40 kg grapefruit juice ready for drinking and 10.0 mango juice to the solution. After slight stirring 25 kg of a hydrolysed lactose having a dry matter content of 45% and 0.18 kg apple pectin was added. After some minutes of stirring the product was smoothed and it was homogenised at 40 bar and thereafter pasteurized at 90°C for five seconds, whereupon the product was cooled to +8°C and was packed. The protein content of the finished product was 9.2%, the fruit juice portion 50.0% and the portion of hydrolysed lactose 11.2% (as calculated from the above mentioned dry matter content of 45%).

The drink was viscous and had a very mellow and pleasant sweet taste. To a great extent the mellowness depends on the high content of proteins. Depending on the high protein content it might be expected that there is a risk for stratification and precipitation of proteins, and therefore a stabilizer in the form of apple pectin was added—however to such small amount as 0.18% as calculated on the finished product no stratification or protein precipitation could be noticed after storing at +8°C for five weeks.

Example 5

100 kg protein containing fruit drink according to the invention ready for drinking was made by mixing 4.8 kg whey protein powder provided by ultra filtration of whey and having a protein content of 62% with 29.2 kg water of about 20°C. The protein powder and the water was stirred for some minutes. The solution was allowed to stand swelling for 4 hours whereupon 10.0 kg blueberry juice ready for drinking, 14.0 kg lemon juice ready for drinking and 20.0 kg apple juice was added while stirring the solution. Further was added 22.0 kg of a hydrolysed lactose having a dry matter content of 58% and a stabilizer in the form of carrageenan in an amount of 0.06 kg.

The mixture was pasteurized at 82°C for 7 seconds, it was homogenised at 230 bar and was cooled at +15°C and packed under aseptic conditions. The fruit juice portion of the finished drink was 44% and the portions of hydrolysed lactose was 12.8% (as calculated on the above mentioned dry matter content). The protein content of the drink was 3.0%. The drink had a strong sour taste of a character which was hard to define and it had a good sweetness.

Depending on the relatively high content of protein and the very little amount of added stabilizer a protein precipitation at storing of the product was expected. After six weeks of storing of the product at +10°C no protein precipitation could be noted, but after 12 weeks of storing a tendency to protein precipitation could be observed.

Example 6

2.0 kg of a whey protein powder having a protein content of 58% was mixed with 22.0 kg of a hydrolysed lactose having a dry matter content of 55%, 11.0 kg pineapple juice, 0.1 kg passion fruit aroma, 0.1 kg pineapple aroma and 64.8 kg water. The mixture was stirred for about 10 minutes at 20°C, whereby a smooth and lump free solution had been obtained. The solution was allowed to stand without stirring for two hours, whereupon it was quickly stirred and pasteurized at 85°C for 15 seconds and was homogenised at 150 bar. The drink was thereafter cooled to +10°C and was packed.

The finished drink had a protein content of 1.2%, a fruit juice protein of 11.0% and a portion of hydrolysed lactose of 12.1% (as calculated with respect to the above mentioned dry matter content).

The drink had a relatively strong sour taste and a slight half-mellow consistancy. When storing the product for six weeks at +8°C the product showed no tendency to stratification or protein precipitation.

A further large number of products having different contents of proteins and hydrolysed lactose and different types and amounts of fruit juice have been tested. It has been shown that the mixing temperature and the mixing time for the protein concentrate and water has little effect on the product and on possible stratification and protein precipitation of the product, whereas on the contrary the content of proteins of the finished product and the amount of hydrolysed lactose has a large effect on such possible stratification and protein precipition. Comparative tests using ordinary sugar rather than hydrolysed lactose failed completely in that in all tests statification and protein precipitation appeared already after a short time of storing. In some cases the proteins precipitated already during the pasteurizing step.

In the following an additional number of examples are given in a form of a table. In all cases protein concentrate, fruit juice and hydrolysed lactose were mixed as stated in the above examples and in all cases the ready mixture was pasteurized and homogenised at the same temperature time-conditions as in the above examples. In all of the following examples the protein portion was obtained from a whey protein powder having a protein content as stated in the table, and the sweetener matter was a hydrolysed lactose having the dry matter content as stated in the table and mainly comprising glucose and galactose.

TABLE

| Example | Juice portion | | Hydrolysed lactose | | Protein | Water |
|---|---|---|---|---|---|---|
| | type | % | DM-content | % | content% | % |
| 7 | mango<br>lemon | 5.3<br>14.0 | 53 | 26.4 | 2.0 | 51.7 |
| 8 | lemon | 25.0 | 53 | 14.3 | 1.0 | 59.2 |
| 9 | apple<br>lingonberry<br>lemon<br>grape | 12.0<br>5.0<br>4.0<br>40.0 | 45 | 6.2 | 3.3 | 28.6 |
| 10 | orange<br>apricot<br>passionfruit | 20.0<br>10.0<br>1.0 | 70 | 9.0 | 2.5 | 57.0 |

(DM-content stands for dry matter content)

It is to be understood that the above specification and the examples given therein are only illustrating cases.

## Claims

1. A protein containing acid fruit juice drink comprising at least a citrus juice portion or a corresponding amount of citrus aromas in the amount of 10—85% and a milk raw material portion of 90—15 percents by weight, in which the milk raw material portion includes 0.5—10 percents by weight or preferably 1—3 percents by weight of whey proteins, characterized in that the fruit juice drink comprises, as a sweetener, 2.5—20 or preferably 6—10 percents by weight of hydrolysed lactose with a hydrolysing degree of at least 40% made of substantially pure lactose prepared from whey or a permeate from ultra filtration of milk or whey and comprising glucose and galactose free from salts and taste giving substances.

2. A fruit juice drink according to claim 1, characterized in that citrus juice portion is a citrus juice concentrate and is strengthened with one or more further natural or synthetic aromas.

3. A fruit juice drink according to claim 1 or 2, characterized in that the citrus juice portion comprises orange juice, pineapple juice and passion fruit juice.

4. A fruit juice drink according to claim 1, in which there is a high content of proteins and/or a low content of hydrolyzed lactose, characterized in that the fruit juice drink further comprises 0.05—0.2% of a stabilizer substance containing polysaccharides having some portion of galacturone acid derivate or galactose derivate, preferably pectin, carrageenan, arabino-galactane or agar-agar.

5. A fruit juice drink according to claim 1, characterized in that the finished protein containing fruit juice drink is pasteurised or subjected to a corresponding heat treatment whereupon the drink is cooled and packed.

6. A fruit juice drink according to claim 5, characterized in that the finished protein containing fruit juice drink is homogenised before or after the heat treatment.

7. A process for the manufacture of a protein containing acid fruit juice drink according to any of the preceding claims and comprising at least a citrus juice portion or a corresponding amount of citrus aromas in an amount of 10—85 percents by weight and a milk raw material portion in an amount of 90—15 percents by weight, characterised by the steps of

preparing a protein solution giving a protein content of 0.5—10 or preferably 1—3 percents by weight as calculated on the product ready for drinking,

mixing one or several fruit bases including at least a citrus juice portion or a corresponding amount of citrus juice with or without aroma additions into the protein solution,

preparing a solution of hydrolyzed lactose made of whey or a permeate from ultra filtration of milk or whey by dissolving substantially pure lactose in water and hydrolyzing the lactose into glucose and galactose free from salts and substances giving taste,

mixing the hydrolyzed lactose in amount of 2,5—20 or preferably 6—10 percents by weight into said protein-fruit solution,

stirring the solution for some minutes and pasteurizing, cooling and packing the protein containing fruit juice drink.

8. A process according to claim 7, characterized in that the fruit juice drink before or after the pasteurizing is homogenised at a pressure of 30—250 bar or preferably 130—200 bar.

9. A process according to claim 7, characterized in that the protein solution is made of a whey protein powder which is dissolved in water and is allowed to swell for at least 4 hours or preferably 4—10 hours before the fruit juice and the hydrolysed lactose is added.

10. A process according to claim 7, characterized in that the hydrolysed lactose is prepared by dissolving the lactose made from whey or a permeate from ultra filtration of milk or whey in water at a temperature of 60—150 or preferably 90—120°C at a dry matter content of 30—90 or preferably 40—80%, whereupon the lactose-water solution thereby obtained is hydrolysed by means of an acid cation exchanger or by means of a suitable enzyme, whereby the hydrolysis is proceeded to a hydrolysing degree of 40—100 or preferably 70—90%, whereupon the salt and taste free glucose-galactose product thereby obtained is cooled to a temperature of less than 30°C and is added to the solution of fruit juice and proteins.

11. A process according to claim 7, characterized in that the protein content is added in a high amount whereas the content of hydrolysed lactose is low, and in that the product before being pasteurized is given an addition of 0.05—0.2 percents by weight of a stabiliser substance containing polysaccharides having some portion of galactose derivate or galacturone acid derivate, preferably an addition of pectin, carrageenan, arabino-galactane or agar-agar.

12. A process according to claim 7, characterized in that the finished product is pasteurized at a temperature of 70°C for a period of 30 seconds or at 90°C for a period of 5 seconds or at any temperature between 70 and 90°C for a corresponding period of between 30 and 5 seconds.

13. A process according to claim 7, characterized in that the fruit juice drink is prepared in concentrated form from concentrated proteins, concentrated fruit juices and/or aromas and concentrated hydrolysed lactose, and in which the drink is pasteurized and homogenized and packed in concentrated form for being diluted to a fruit drink ready for drinking just when served.

## Patentansprüche

1. Protein enthaltendes saures Fruchtsaftgetränk, umfassend wenigstens einen Zitrusfruchtsaftteil oder eine entsprechende Menge an Zitrusfruchtaromen in der Mange von 10 bis 85% und einen Milchrohmaterialteil von 90 bis 15 Gew.—%, bei dem der Milchrohmaterialteil 0,5 bis 10 Gew.—%, vorzugsweise 1 bis 3 Gew.—%, Molkeproteine einschließt, dadurch gekennzeichnet, daß das Fruchtsaftgetränk als Süßstoff 2,5 bis 20, vorzugsweise 6 bis 10 Gew.—%, einer hydrolisierten Lactose mit einem Hydrolysegrad von wenigstens 40% aus weitgehend reiner Lactose, hergestellt aus Molke oder einem Permeat durch Ultrafiltration von Milch oder Molke und umfassend Glucose und Galactose, frei von Salzen und geschmacksgebenden Substanzen, umfaßt.

2. Fruchtsaftgetränk nach Anspruch 1, dadurch gekennzeichnet, daß der Zitrusfruchtsaftteil ein Zitrusfruchtsaftkonzentrat ist und mit einem oder mehreren weiteren natürlichen oder synthetischen Aromen angereichert ist.

3. Fruchtsaftgetränk nach Anspruch 1 oder 2, dadurch gekennzeichnet, daß der Zitrusfruchtsaftteil Orangensaft, Ananassaft und Passionsfruchtsaft umfaßt.

4. Fruchtsaftgetränk nach Anspruch 1, mit einem hohen Gehalt an Proteinen und/oder einem niedrigen Gehalt an hydrolisierter Lactose, dadurch gekennzeichnet, daß das Fruchtsaftgetränk weiterhin 0,05 bis 0,2% einer Stabiliserungssubstanz, enthaltend Polysaccharide mit einigen Teilen eines Galacturonsäurederivats oder Galactosederivats, vorzugsweise Pektin, Karrageenin, Arabino-Galactan oder Agar-Agar, umfaßt.

5. Fruchtsaftgetränk nach Anspruch 1, dadurch gekennzeichnet, daß das Protein enthaltende Endfruchtsaftgetränk pasteurisiert wird oder einer entsprechenden Wärmebehandlung unterworfen wird, worauf das Getränk gekühlt und verpackt wird.

6. Fruchtsaftgetränk nach Anspruch 5, dadurch gekennzeichnet, daß das Protein enthaltende Endfruchtsaftgetränk vor oder nach der Wärmebehandlung homogenisiert wird.

7. Verfahren zur Herstellung eines Protein enthaltenden sauren Fruchtsaftgetränks nach einem der vorhergehenden Ansprüche und umfassend wenigstens einen Zitrusfruchtsaftteil oder eine entsprechende Menge an Zitrusaromen in einer Menge von 10 bis 85 Gew.—% und einen Milchrohmaterialteil in einer Menge von 90 bis 15 Gew.—%, gekennzeichnet durch die Stufen:

Herstellen einer Proteinlösung mit einem Proteingehalt von 0,5 bis 10 Gew.—%, vorzugsweise 1 bis 3 Gew.—%, berechnet auf das trinkfertige Produkt,

Mischen eines oder mehrerer Fruchtgrundstoffe einschließlich wenigstens eines Zitrusfruchtsaftteils oder einer entsprechenden Menge an Zitrusfruchtsaft mit oder ohne Aromazusätzen in die Proteinlösung,

Herstellen einer Lösung einer hydrolisierten Lactose, hergestellt aus Molke oder einem Permeat durch Ultrafiltration von Milch oder Molke durch Lösen weitgehend reiner Lactose in Wasser und Hydrolisieren der Lactose in Glucose und Galactose, frei von Salzen und geschmacksgebenden Substanzen,

Mischen der hydrolisierten Lactose in einer Menge von 2,5 bis 20 Gew.-%, vorzugsweise 6 bis 10 Gew.-%, in die Protein-Fruchtlösung,

Rühren der Lösung für einige Minuten und Pasteurisieren, Kühlen und Verpacken des Protein enthaltenden Fruchtsaftgetränks.

8. Verfahren nach Anspruch 7, dadurch gekennzeichnet, daß das Fruchtsaftgetränk vor oder nach dem Pasteurisieren bei einem Druck von 30 bis 250 bar, vorzugsweise 130 bis 200 bar, homogenisiert wird.

9. Verfahren nach Anspruch 7, dadurch gekennzeichnet, daß die Proteinlösung aus einem Molkeproteinpulver hergestellt wird, das in Wasser gelöst und wenigstens vier Stunden, vorzugsweise vier bis zehn Stunden, zum Quellen stehen gelassen wird, bevor der Fruchtsaft und die hydrolisierte Lactose zugegeben werden.

10. Verfahren nach Anspruch 7, dadurch gekennzeichnet, daß die hydrolisierte Lactose hergestellt wird durch Lösen der Lactose, hergestellt aus Molke oder einem Permeat durch Ultrafiltration von Milch oder Molke, in Wasser bei einer Temperatur von 60 bis 150°C, vorzugsweise 90 bis 120°C, bei einem Trockensubstanzgehalt von 30 bis 90%, vorzugsweise 40 bis 80%, worauf die so erhaltene Lactose-Wasser-Lösung mittels eines sauren Kationenaustauschers oder eines geeigneten Enzyms hydrolisiert wird, wobei die Hydrolyse bis zu einem Hydrolysegrad von 40 bis 100%, vorzugsweise 70 bis 90%, fortgesetzt wird, worauf das so erhaltene salz- und geschmacksfreie Glucose-Galactose-Produkt auf eine Temperatur von weniger als 30°C gekühlt wird und der Lösung aus Fruchtsaft und Proteinen zugegeben wird.

11. Verfahren nach Anspruch 7, dadurch gekennzeichnet, daß der Proteingehalt in einer hohen Menge zugegeben wird, wohingegen der Gehalt an hydrolisierter Lactose gering ist, und das dem Produkt vor dem Pasteurisieren 0,05 bis 0,2 Gew.-% einer Stabiliserungssubstanz, enthaltend Polysaccharide mit einigen Teilen eines Galactosederivats oder Galacturonsäurederivats, vorzugsweise Pektin, Karrageenin, Arabino-Galactan oder Agar-Agar, zugegeben werden.

12. Verfahren nach Anspruch 7, dadurch gekennzeichnet, daß das Endprodukt bei einer Temperatur von 70°C dreißig Sekunden oder bei 90°C fünf Sekunden oder bei einer Temperatur zwischen 70 und 90°C entsprechend dreißig bis fünf Sekunden pasteurisiert wird.

13. Verfahren nach Anspruch 7, dadurch gekennzeichnet, daß das Fruchtsaftgetränk in konzentrierter Form aus konzentrierten Proteinen, konzentrierten Fruchtsäften und/oder Aromen und konzentrierter hydrolisierter Lactose hergestellt wird, und wobei das Getränk pasteurisiert, homogenisiert und verpackt wird in konzentrierter Form, um bei Servieren in ein trinkfertiges Fruchtgetränk verdunnt werden zu können.

## Revendications

1. Boisson au jus de fruit acide contenant des protéines comprenant au moins une partie jus de citron ou une quantite correspondante d'arômes de citron en une quantité de 10—85% et une partie matière première consistant en du lait de 90—15 pourcent poids, dans laquelle la partie matière première consistant en lait comprend 0,5—10 pourcent en poids ou de préférence 1—3 pourcent en poids de protéines de petit lait, caractérisée en ce que la boisson au jus de fruit comprend, comme édulcorant, 2,5—20 ou de préférence 6—10 pourcent en poids de lactose hydrolysé avec un degré d'hydrolyse d'au moins 40% fait de lactose pratiquement pur préparé à partir de petit lait ou d'un produit d'imprégnation provenant d'ultrafiltration de lait ou de petit lait et comprenant du glucose et du galactose exempts de sels et de substances donnant un goût.

2. Boisson au jus de fruit selon la revendication 1, caractérisée en ce que la partie jus de citron est un concentré de jus de citron et est renforcée par un ou plusieurs arômes naturels ou synthétiques supplémentaires.

3. Boisson au jus de fruit selon les revendications 1 ou 2, caractérisée en ce que la partie jus de citron comprend du jus d'orange, du jus d'ananas et du jus de fruit de la passion.

4. Boisson au jus de fruit selon la revendication 1, dans laquelle il y a une forte teneur en protéines et/ou une faible teneur en lactose hydrolysé, caractérisé en ce que la boisson au jus de fruit comprend de plus 0,05—0,2% d'une substance stabilisatrice contenant des polysaccharides ayant une certaine quantité de dérivé d'acide galacturone ou de dérivé de galactose, de préférence de la pectine, de la carraghénane, de l'arabino-galactane ou de l'agar-agar.

5. Boisson au jus de fruit selon la revendication 1, caractérisée en ce que la boisson au jus de fruit contenant des protéines, finie est pasteurisée ou soumise à un traitement à la chaleur correspondant sur quoi la boisson est refroidie et conditionnée.

6. Boisson au jus de fruit selon la revendication 5, caractérisée en ce que la boisson au jus de fruit finie contenant des protéines est homogénéisée avant ou après le traitement à la chaleur.

7. Procédé de fabrication d'une boisson au jus de fruit acide contenant des protéines selon l'une quelconque des revendications précédentes et comprenant au moins une partie jus de citron ou une quantité correspondante d'arômes de citron en une quantité de 10—85 pourcent en poids et une partie matière première consistant en du lait en une quantité de 90—15 pourcent en poids, caractérisé par les étapes de

preparation d'une solution de protéines donnant une teneur en protéines de 0,5—10 ou de préférence de 1—3 pourcent en poids comme calculé sur le produit prêt à la consommation,

mélange d'une ou de plusieurs bases de fruit comprenant au moins une partie jus de citron ou une quantité correspondante de jus de citron avec ou sans addition d'arômes dans la solution de protéines,

préparation d'une solution de lactose hydrolysé fait de petit lait ou d'un produit d'imprégnation provenant d'ultrafiltration de lait ou de petit lait par dissolution de lactose pratiquement pur dans de l'eau et hydrolyse du lactose en glucose et galactose exempts de sels et de substances donnant un goût,

mélange du lactose hydrolysé en une quantité de 2,5—20 ou de préférence de 6—10 pourcent en poids dans ladite solution aux fruits protéinique,

agitation de la solution quelques minutes et pasteurisation refroidissement et conditionnement de la boisson au jus de fruit contenant des protéines.

8. Procédé selon la revendication 7, caractérisé en ce que la boisson au jus de fruit avant ou après la pasteurisation est homogénéisée à une pression de 30—250 bars ou de préférence de 130—200 bars.

9. Procédé selon la revendication 7, caractérisé en ce que la solution de protéines est faite d'une poudre de protéines de petit lait qui est dissoute dans de l'eau et qu'on laisse gonfler pendant au moins 4 heures ou de préférence 4—10 heures avant l'addition du jus de fruit et du lactose hydrolysé.

10. Procédé selon la revendication 7, caractérisé en ce que le lactose hydrolysé est préparé par dissolution du lactose fait à partir de petit lait ou d'un produit d'imprégnation d'ultrafiltration de lait ou de petit lait dans de l'eau à une température de 60—150 ou de préférence de 90—120°C à une teneur en matière séche de 30—90 ou de préférence de 40—80%, sur quoi la solution lactose-eau obtenue ainsi est hydrolysée au moyen d'un échangeur de cation acide ou au moyen d'une enzyme appropriée, grâce à quoi l'hydrolyse est effectuée jus qu'à degré d'hydrolyse de 40—100 ou de préférence 70—90%, sur quoi le produit glucose-galactose exempt de sel et de goût ainsi obtenu est refroidi à une température inférieure à 30°C et est ajouté à la solution de jus de fruit et de protéines.

11. Procédé selon la revendication 7, caractérisé en ce que la teneur en protéines est ajoutée en une quantité élevée alors que la teneur en lactose hydrolysé est faible, et en ce qu'on ajoute au produit avant la pasteurisation 0,05—0,2 pourcent en poids d'une substance stabilisatrice contenant des polysaccharides ayant une certaine quantité de dérivé de galactose ou de dérivé d'acide galacturone, de préférence une addition de pectine, de carraghénane, d'arabino-galactane ou d'agar-agar.

12. Procédé selon la revendication 7, caractérisé en ce que le produit fini est pasteurisé à une température de 70°C pendant une durée de temps de 30 secondes ou à 90°C pendant une durée de temps de 5 secondes et à toute température comprise entre 70 et 90°C pendant une période de temps correspondante comprise entre 30 et 5 secondes.

13. Procédé selon la revendication 7, caractérisé en ce que la boisson au jus de fruit est préparée sous une forme concentrée à partir de protéines concentrées, de jus et/ou d'arômes de fruit concentrés et de lactose hydrolysé concentré, et dans lequel la boisson est pasteurisée et homogénéisée et conditionnée sous une forme concentrée pour être diluée en une boisson aux fruits prête à être bue juste avant d'être servie.